# EUROPEAN PATENT SPECIFICATION

(11) **EP 2 390 066 B1**
(45) Date of publication and mention of the grant of the patent: **10.08.2016**
(21) Application number: 11166110.4
(22) Date of filing: 13.05.2011
(51) Int. Cl.: B25J 9/16

(54) **Robotic snakes for use in non-destructive evaluation and maintenance operations**
Roboterschlangen zur Verwendung bei zerstörungsfreien Bewertungs- und Wartungsoperationen
Serpents robotiques pour une utilisation dans l'évaluation non destructive et les opérations de maintenance

(30) Priority: 25.05.2010 US 787226
(43) Date of publication of application: 30.11.2011
(73) Proprietor: The Boeing Company, Chicago, IL 60606-1596 (US)
(72) Inventor: Georgeson, Gary E., Federal Way, 98003-8616 (US); Motzer, William P., Seattle, 98121 (US); Hafenrichter, Joseph I., Seattle, 98121 (US)
(74) Representative: Witte, Weller & Partner Patentanwälte mbB

(56) References cited:
- WO-A2-02/16995
- BUCKINGHAM R ET AL: "Snaking around in a nuclear jungle", INDUSTRIAL ROBOT, MCB UNIVERSITY PRESS, GB, vol. 32, no. 2, 1 January 2005 (2005-01-01), pages 120-127, XP007909927, ISSN: 0143-991X
- Anscombe R, Bryant A, Buckingham R, Ferguson G, Graham A, Lichon M, Parry N, Brandrick P, Redman M, Summers M, Green B: "Snake-Arm Robots: A New Approach to Aircraft Assembly", Aerospace Manufacturing and Automated Fastening Conference and Exhibition, September 2006, Toulouse, France, 12 September 2006 (2006-09-12), pages 1-7, XP002666861, DOI: 10.4271/2006-01-3141 Retrieved from the Internet: URL:http://www.ocrobotics.com/downloads/AM AF2006.pdf [retrieved on 2011-12-13]
- LEWIS M A ET AL: "R7: A SNAKE-LIKE ROBOT FOR 3-D VISUAL INSPECTION", PROCEEDINGS OF THE IEEE/RSJ/GI INTERNATIONAL CONFERENCE ON INTELLIGENT ROBOTS AND SYSTEMS: ADVANCED ROBOTICS AND THE REAL WORLD. MUNICH, SEPT. 12 - 16, 1994; [PROCEEDINGS OF THE INTERNATIONAL CONFERENCE ON INTELLIGENT ROBOTS AND SYSTEMS (IROS)], NEW, vol. 2, 12 September 1994 (1994-09-12), pages 1310-1317, XP000514645, ISBN: 978-0-7803-1934-9
- HOLLINGUM J: "Putting a snake in the sub", INDUSTRIAL ROBOT 1997 EMERALD GROUP PUBLISHING LTD. GB, vol. 24, no. 6, 1997, pages 418-422, XP002666862, DOI: DOI:10.1108/01439919710192536
- SFAKIOTAKIS ET AL: "Neuromuscular control of reactive behaviors for undulatory robots", NEUROCOMPUTING, ELSEVIER SCIENCE PUBLISHERS, AMSTERDAM, NL, vol. 70, no. 10-12, 29 April 2007 (2007-04-29), pages 1907-1913, XP022053015, ISSN: 0925-2312, DOI: 10.1016/J.NEUCOM.2006.10.139

## Description

### BACKGROUND

The subject matter described herein relates generally to maintenance and, more particularly, to methods and systems for use in performing non-destructive evaluations and maintenance operations using a robotic snake.

Known aircraft generally requires routine maintenance including inspection and/or repair of various components. As a result, structural health monitoring, including a scheduled and detailed inspection of components, of aircraft is a growing field. However, because of various spatial restrictions, physical and/or visual access to at least some of these components may be relatively difficult. For example, access to at least some components requires disassembly of at least one occluding structure and/or removal of the component for evaluation and/or maintenance of the component. As such, maintenance of at least some components may be time consuming and/or costly. Additionally, the disassembly and/or reassembly of such aircraft structures to perform maintenance activities may reduce a lifespan and/or reliability of the structure and/or component.

Examples of maintenance robots for different types of structures are shown in documents Anscombe R, Bryant A, Buckingham R, Ferguson G, Graham A, Lichon M, Parry N, Brandrick P, Redman M, Summers M, Green B: "Snake-Arm Robots: A New Approach to Aircraft Assembly", Aerospace Manufacturing and Automated Fastening Conference and Exhibition, Toulouse, France, 12 September 2006, pp 1-7; BUCKINGHAM R ET AL: "Snaking around in a nuclear jungle", INDUSTRIAL ROBOT, vol. 32, no. 2, 1 Jan 2005, pp. 120-127, XP7909927; WO 02/16995 A2 (OLIVER CRISPIN CONSULTING [GB]; BUCKINGHAM ROBERT OLIVER [GB]; GRAHAM) 28 February 2002.

It is possible to improve performance for maintaining aircraft and/or aircraft components. The subject matter described herein facilitates accessing various components in limited access areas and, thus, facilitates reducing a time and/or cost associated with aircraft maintenance.

### BRIEF DESCRIPTION

In one aspect, a method is provided for maintaining an object using a control system, said method comprising: coupling at least one sensor to at least one of a plurality of serpentine bodies, each of the plurality of serpentine bodies sized to be inserted into an access defined in the object being maintained, wherein the at least one sensor is in communication with the control system; coupling at least one tool to at least one of the plurality of serpentine bodies, wherein the at least one tool is in communication with the control system; coupling the control system to at least one of said plurality of serpentine bodies; determining a position of at least one of the plurality of serpentine bodies relative to the object; transmitting sine waves through the at least one of the plurality of serpentine bodies to cause the at least one of the plurality of serpentine bodies to move in a desired direction and in a desired locomotive manner; selectively positioning at least one of the plurality of serpentine bodies in a desired location relative to the object; inspecting, using the at least one sensor, the object; and modifying the object using the at least one tool. inserted into an access defined in the object being maintained. The at least one sensor is in communication with a control system. At least one tool is coupled to at least one of the plurality of serpentine bodies. The tool is in communication with the control system. The object is inspected using the at least one sensor and modified using the at least one tool.

In another aspect, a system is provided for maintaining an object, said system comprising: a plurality of serpentine bodies; at least one sensor coupled to at least one of said plurality of serpentine bodies, said at least one sensor configured to gather data from the object being maintained; and at least one tool coupled to at least one of said plurality of serpentine bodies, said at least one tool configured to selectively modify the object, and characterized by a control system coupled to at least one of said plurality of serpentine bodies, said at least one sensor, and said at least one tool, said control system configured to: transmitting sine waves through the at least one of the plurality of serpentine bodies to cause the at least one of the plurality of serpentine bodies to move in a desired direction in a desired locomotive manner; selectively position said sensor relative to the object; and determine whether at least a portion of the object satisfies at least one predefined quality standard associated with the object.

The features, functions, and advantages that have been discussed can be achieved independently in various embodiments of the present invention or may be combined in yet other embodiments further details of which can be seen with reference to the following description and drawings.

### BRIEF DESCRIPTION OF THE DRAWINGS

FIGS. 1A and 1B are illustrations of an exemplary robotic snake that may be used to perform maintenance of components;
FIG. 2 is an illustration of an exemplary control system that may be used with the robotic snake shown in FIGS. 1A and 1B
FIG. 3 is a flow chart illustrating an exemplary method for maintaining an object using the robotic snake shown in FIGS. 1A and 1B.

### DETAILED DESCRIPTION

The subject matter described herein relates generally to the maintenance of an object. More particularly, the subject matter described herein relates to methods and systems that enable the non-destructive evaluation (NDE) and maintenance of components using a robotic snake. In one embodiment, the robotic snake described herein includes a serpentine body, at least one sensor, and at least one tool. Generally, as described in more detail below, the serpentine body enables the snake to be selectively positioned relative to the component being inspected, positioning the sensor to inspect the component, and modifying the component based on the inspection.

An exemplary technical effect of the methods and systems described herein includes at least one of (a) generating a model image of a component; (b) determining a position of the serpentine body relative to the component, (c) navigating the serpentine body within and/or relative to the component, (d) inspecting the component; (e) determining whether the component satisfies at least one quality standard associated with the component; and (f) modifying the component.

As used herein, an element or step recited in the singular and proceeded with the word "a" or "an" should be understood as not excluding plural elements or steps unless such exclusion is explicitly recited. Furthermore, references to "one embodiment" of the present invention are not intended to be interpreted as excluding the existence of additional embodiments that also incorporate the recited features.

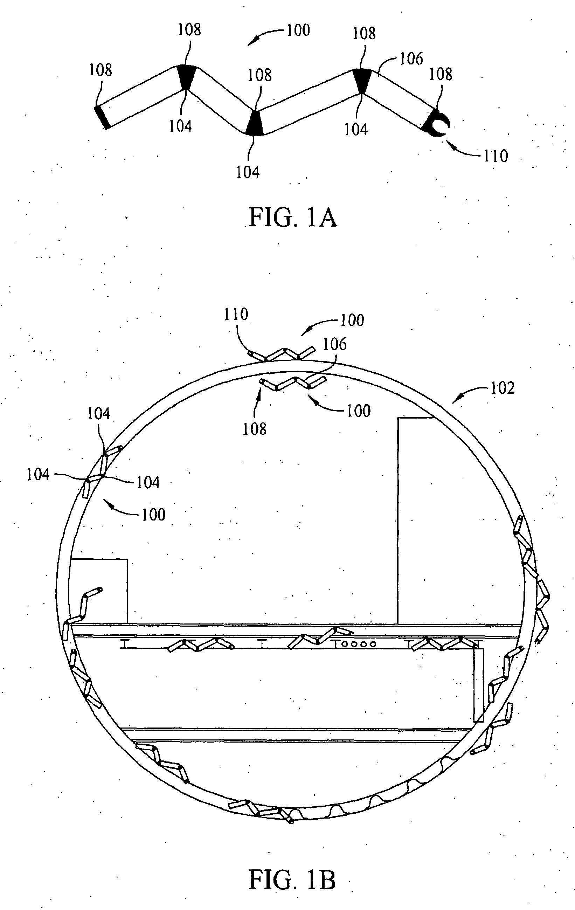

FIG. 1A illustrates an exemplary robotic snake 100 that may be used to inspect, evaluate, maintain, and/or repair an object or a component 102, and FIG. 1B illustrates robotic snake 100 inspecting, evaluating, maintaining, and/or repairing an airplane fuselage. In the exemplary embodiment, robotic snake 100 includes a plurality of joints 104 that enable selectively positioning robotic snake 100 in various positions. More specifically, joints 104 are actuatable with multiple degrees of freedom such that robotic snake 100 can be selectively positioned in a multitude of various configurations. As such, robotic snake 100 is able to roll, pitch, and/or extend to flex, reach, and/or approach a large volume of workspace. For example, and as described in more detail below, robotic snake 100 is able to be selectively controlled to enable robotic snake 100 to perform a variety of different locomotive capabilities, such as, but not limited to, linear progression, sidewinding, corkscrewing, rolling, swimming, channel climbing, tube climbing, pole climbing, cornering, pipe rolling, stair climbing, gap - crossing, reaching into an opening, and/or railroad track crossing. As such, robotic snake 100 is capable of inchworm-type locomotion and/or nightcrawler-type locomotion. Additionally, robotic snake 100 is coupled to at least one wheel to facilitate moving in a desired direction.

In one embodiment, sine waves are transmitted through robotic snake 100 to cause robotic snake 100 to move in a desired direction and in a desired locomotive manner. More specifically, in such an embodiment, joints 104 are actuated to reflect a sine wave being transmitted through the body. The sine waves are variably selected to include a suitable amplitude, period, and/or direction that will result in a desired movement of robotic snake 100. For example, robotic snake 100 may be propelled forwards and/or backwards by transmitting sine waves through a length of robotic snake 100. Additionally, robotic snake 100 may be propelled sideways by sending a vertically-oriented sine wave and/or a horizontally-oriented sine wave relative to the body. Robotic snake 100 is navigable in a three-dimensional space by variably transmitting sine waves in tandem with bending, twisting, spiraling, turning, vibrating, and/or pulsing motions.

As such, robotic snake 100 is configured to move through general and/or limited access areas to inspect and/or modify component 102. In one embodiment, robotic snake 100 is able to retrieve another robotic snake 100 should, for example, the other robotic snake 100 be restricted from movement. In such an embodiment, the robotic snake 100 restricted from movement suitably communicates with robotic snake 100 for rescue, as described in further detail below.

In the exemplary embodiment, a skin 106 extends over and defines an outer surface of robotic snake 100. Skin 106 may be configured and/or fabricated from a material suitable to provide protection, compliance, flexibility, and/or resilience to robotic snake 100. More specifically, robotic snake 100 is encased entirely within skin 106. In one aspect, skin 106 provides robotic snake 100 with a level of buoyancy that enables robotic snake 100 to operate in an aquatic, wet, and/or damp environment. In another aspect, skin 106 provides robotic snake 100 with a level of friction that enables robotic snake 100 climb in a vertical direction.

At least one sensor 108 is coupled to robotic snake 100. For example, any quantity of sensors 108 may be coupled to robotic snake 100 at any suitable location that enables robotic snake 100 to function as described herein. In one embodiment, sensor 108 is coupled to either end and/or at an internal joint of robotic snake 100 depending on a need and/or application. Because of the wide range of movement of robotic snake 100, robotic snake 100 may move sensor 108 in any direction within a suitable range of movement of robotic snake 100 for sensor 108 to function as described herein. Sensor 108 provides position data relevant to robotic snake 100 and/or to inspect component 102. More specifically, in the exemplary embodiment, sensor 108 detects at least one geometric parameter of robotic snake 100 and/or of component 102. For example, sensor 108 may be, but is not limited to, being a camera, an optical sensor, an infrared sensor, a local positioning system sensor, an accelerometer, a gyroscope, an automated movement sensor, a chemical sensor, and/or a nondestructive evaluation sensor.

At least one tool 110 is coupleable to robotic snake 100. For example, any quantity of tools 110 may be coupled to robotic snake 100 at any suitable location that enables robotic snake 100 to function as described herein. As such, in one embodiment, robotic snake 100 may be coupled to at least one sensor 108 and/or and at least one tool 110. More specifically, in such an embodiment, a first robotic snake 100 may operate in cooperation with a second robotic snake 100, wherein first robotic snake 100 is coupled to at least one sensor 108 and/or at least one tool, and second robotic snake 100 is coupled to at least one sensor 108 and/or at least one tool. In one embodiment, tool 110 is releasably coupled to either end and/or at an internal joint of robotic snake 100 depending on a need and/or application. In one aspect, tool 110 facilitates navigation of robotic snake 100. For example, tool 110 may be a drill and/or a cutting tool that enables robotic snake 100 to traverse a variety of different obstacles by drilling and/or cutting an opening through a portion of component 102. In another example, tool 110 may be an auger-type tool, a double-track tool, a badger-mechanism, and/or a flat head tool that enables robotic snake 100 to traverse a variety of different obstacles, such as an insulation blanket and/or a fuel bladder, by burrowing under the insulation blanket and/or the fuel bladder. In a further example, tool 110 may be a scaling tool, such as a suction cup, that enables robotic snake 100 to traverse a variety of different obstacles through a climbing movement.

In another aspect, tool 110 is used to repair and/or structurally reinforce component 102. For example, tool 110 may seal any opening of component 102, patch a portion of component 102, and/or repair, seal, paint, and/or apply primer to a surface of component 102.

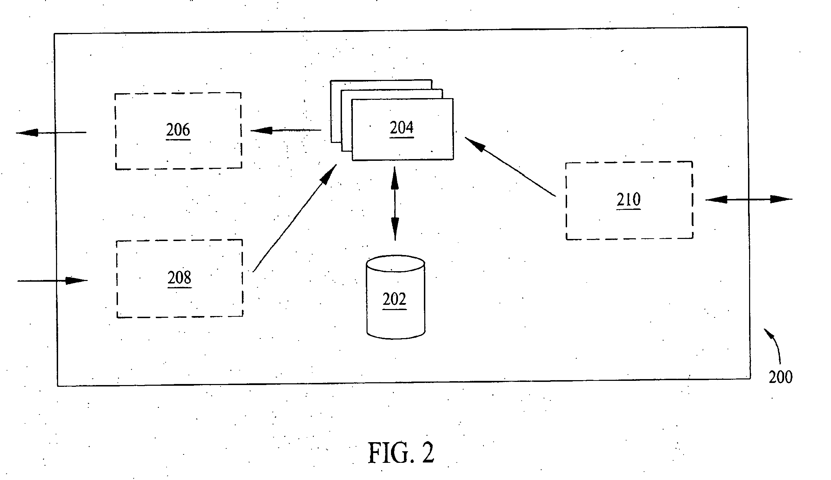

FIG. 2 illustrates an exemplary control system 200 that may be used with robotic snake 100, sensor 108, and/or tool 110. In the exemplary embodiment, control system 200 includes a memory device 202 and a processor 204 coupled to memory device 202 for executing instructions. In some embodiments, executable instructions are stored in memory device 202. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits.

Control system 200 is configurable to perform one or more operations described herein by programming processor 204. For example, processor 204 may be programmed by encoding an operation as one or more executable instructions and by providing the executable instructions in memory device 202. Processor 204 may include one or more processing units (e.g., in a multi-core configuration).

Memory device 202 includes one or more devices that enable information, such as executable instructions and/or other data, to be selectively stored and retrieved. Memory device 202 may include one or more computer readable media, such as, without limitation, dynamic random access memory (DRAM), static random access memory (SRAM), a solid state disk, and/or a hard disk. Moreover, memory device 202 may be configured to store, without limitation, executable instructions and/or any other type of data.

During use, control system 200 facilitates optimal positioning of robotic snake 100, sensor 108, and/or tool 110 to enable inspection, evaluation, maintenance, and/or repair of any desired portion of component 102. More specifically, control system 200 is programmable and/or is programmed to selectively actuate, position, and/or orient robotic snake 100, sensor 108 and/or tool 110 relative to component 102. Control of robotic snake 100 may range anywhere from being fully autonomous to being completely user-guided. In each embodiment described herein, at least one joint 104 of robotic snake 100 is selectively operated to move robotic snake 100 in a desired direction.

In one aspect, control system 200 is programmable and/or is programmed to move robotic snake 100 based on a topological decomposition of the three-dimensional space being traversed by robotic snake 100. For example, control system 200 may determine a position of robotic snake 100 relative to a surface of component 102. In one embodiment, X-ray backscatter technology is used to generate a three-dimensional model of component 102. In another embodiment, a relative position of robotic snake 100 may be determined using an extended fiber optic strain sensor extending along a length of robotic snake 100. In such an embodiment, the fiber optic strain sensor may enable robotic snake 100 to fully define a location of robotic snake 100 in free space. For example, when used in cooperation with a three-dimensional model of component 102, a three-dimensional model of robotic snake 100 may be generated with respect to the three-dimensional model of component 102.

A motion planning algorithm may be developed based at least in part on the topological decomposition and/or based on a geometric parameter detected by sensor 108. Additionally or alternatively, the motion planning algorithm may be based at least in part on a range of cost functions including power consumption and/or safety. The motion planning algorithm may be used to plan a mode of operation, wherein subsequent commands are dependent, or are based on, i.e., flow from, from previous commands.

In another aspect, control system 200 is programmable and/or is programmed to determine whether component 102 satisfies predetermined quality standards associated with component 102. For example, based on such a determination, control system 200 may determine whether component 102 requires maintenance, repair, and/or replacement. In one embodiment, at least one sensor 108 detects a geometric parameter of component 102, and control system 200 determines whether the geometric parameter deviates from a predetermined quality standard for component 102. Based on the determination of control system 200, tool 110 may be actuated to modify component 102 to satisfy the quality standard associated with component 102.

In the exemplary embodiment, control system 200 includes a presentation interface 206 that is coupled to processor 204 to enable information to be presented to a user. For example, presentation interface 206 may include a display adapter (not shown) that is coupleable to a display device (not shown), such as a cathode ray tube (CRT), a liquid crystal display (LCD), an organic LED (OLED) display, and/or an "electronic ink" display. In some embodiments, presentation interface 206 includes one or more display devices. In addition to, or in the alternative, presentation interface 206 may be coupled to, and/or include, a printer.

In the exemplary embodiment, control system 200 includes an input interface 208 that receives input from a user. For example, input interface 208 receives information suitable for use with the methods described herein. Input interface 208 is coupled to processor 204 and may include, for example, a keyboard, a pointing device, a mouse, a stylus, a touch sensitive panel (e.g., a touch pad or a touch screen), and/or a position detector. It should be noted that a single component, for example, a touch screen, may function as both a display device of presentation interface 206 and as an input interface 208.

In the exemplary embodiment, control system 200 includes a communication interface 210 coupled to processor 204. In the exemplary embodiment, communication interface 210 communicates with a remote device, such as robotic snake 100, sensor 108, tool 110, and/or another control system 200. More specifically, in the exemplary embodiment, control system 200 cooperates with presentation interface 206 and/or input interface 208, to enable a user to remotely operate robotic snake 100. For example, communication interface 210 may include, without limitation, a wired network adapter, a wireless network adapter, and/or a mobile telecommunications adapter. Alternatively, or additionally, control system 200 may be coupled to robotic snake 100, sensor 108, tool 110, and/or another control system 200 via a network (not shown). Such a network may include, without limitation, the Internet, a local area network (LAN), a wide area network (WAN), a wireless LAN (WLAN), a mesh network, and/or a virtual private network (VPN) or other suitable communication means. In the exemplary embodiment, control system 200 is electrically coupled directly to, and/or formed integrally with, robotic snake 100, sensor 108, and/or tool 110. In one embodiment, a plurality of robotic snakes 100 communicates with each other to facilitate an evaluation and/or maintenance of component 102 in an expedited manner.

A power source (not shown) is coupled to robotic snake 100, sensor 108, tool 110, and/or control system 200. More specifically, in the exemplary embodiment, the power source is a local power source, such as battery, that enables robotic snake 100 to function as described herein. Alternatively, the power source is a power cord and is, thus, coupled to robotic snake 100.

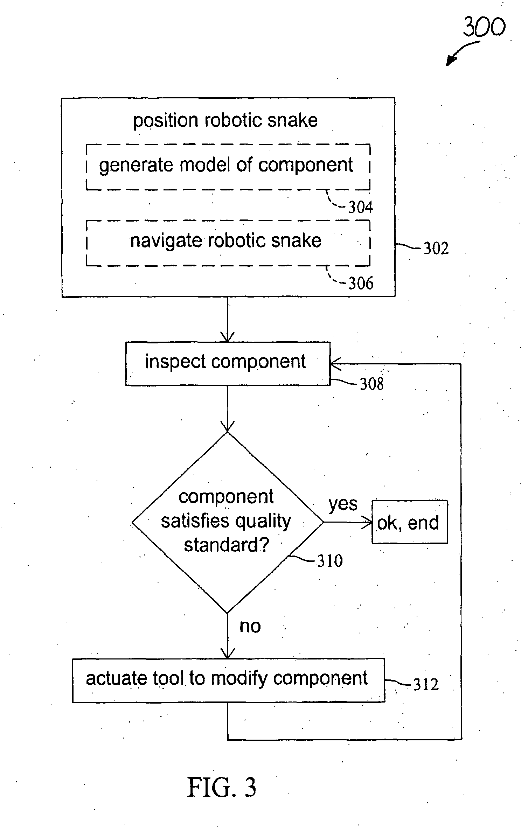

FIG. 3 illustrates a flow chart of an exemplary method 300 for use with a robotic snake 100. During operation, at least one robotic snake 100 is used for non-destructive evaluation and/or maintenance operations of component 102. More specifically, robotic snake 100 may be used to ensure that the useful life of component 102 has not diminished beyond a predetermined threshold and/or that component 102 still satisfies a predetermined quality standard associated with component 102.

Initially, at least one robotic snake 100 is coupled to sensor 108, and robotic snake 100 is then positioned 302 adjacent to component 102 and, more specifically, within an area of component 102 that will enable robotic snake 100 to be moved to a desired inspection area of component 102. More specifically, during use of snake 100, control system 200 generates 304 a model image representative of an interior and/or a surface of a portion of component 102 being inspected. A position of robotic snake 100 and/or sensor 108 are determined relative to a surface of component 102. Based at least partially on the model image and/or the position of robotic snake 100 relative to component 102, robotic snake 100 is navigated 306 within component 102 to enable sensor 108 to be oriented in a suitable position to inspect component 102. In one embodiment, tool 110 may form an opening through a portion of component 102 that is sized to enable robotic snake 100 to navigate through the opening. In another embodiment, tool 110 burrows under a portion of component 102, such as under an insulation blanket and/or a fuel bladder. In yet another embodiment, tool 110 is coupled to another robotic snake 100, and a plurality of robotic snakes 100 communicate with each other to cooperatively inspect and/or modify component 102.

As robotic snake 100 is moved about component 102, sensor 108 inspects 308 component 102. More specifically, component 102 is inspected to determine whether any deviation, such as structure integrity deviation, exists in component 102. Data gathered by sensor 108 is transmitted and/or communicated to control system 200.

Control system 200 receives data from sensor 108 and uses such data to determine 310 whether predetermined quality standards are satisfied by comparing data received from sensor 108 to the predetermined quality standards and determines if any deviations exist between data received from sensor 108 and the predetermined quality standards. Based on the comparisons, control system 200 determines whether component 102 requires modification, repair, and/or replacement based at least partially on whether the received data satisfies the predetermined quality standards. In one embodiment, the received data and the predetermined quality standards are associated with geometric parameters of component 102.

Tool 110 is selectively actuated 312 to modify component 102 based at least partially on the inspection results. For example, tool 110 may be used to seal an opening of component 102 and/or to apply a patch to component 102. Component 102 is modified to satisfy the quality standard for component 102.

The embodiments described herein provide inspecting and/or monitoring capabilities for use in maintaining an object and are not limited to certain geometries and/or locations like existing solutions currently employed in the field. Additionally, the exemplary methods and systems enable an object to be modified remotely to satisfy a quality standard associated with the object. As such, the exemplary methods and systems facilitate the access of various components located in limited access areas and, as such, facilitate reducing a time and/or a cost associated with maintaining an object. The exemplary systems and methods are not limited to the specific embodiments described herein, but rather, components of each system and/or steps of each method may be utilized independently and separately from other components and/or method steps described herein. Each component and each method step may also be used in combination with other components and/or method steps.

This written description uses examples to disclose certain embodiments of the present invention, including the best mode, and also to enable any person skilled in the art to practice those certain embodiments, including making and using any devices or systems and performing any incorporated methods. The patentable scope of the present invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method (300) for maintaining an object (102) using a control system (200), said method (300) comprising:
coupling at least one sensor (108) to at least one of a plurality of serpentine bodies (100), each of the plurality of serpentine bodies (100) sized to be inserted into an access defined in the object (102) being maintained, wherein the at least one sensor (108) is in communication with the control system (200);
coupling at least one tool (110) to at least one of the plurality of serpentine bodies (100), wherein the at least one tool (110) is in communication with the control system (200);
coupling the control system (200) to at least one of said plurality of serpentine bodies (100);
determining a position of at least one of the plurality of serpentine bodies (100) relative to the object (102);
transmitting sine waves through the at least one of the plurality of serpentine bodies to cause the at least one of the plurality of serpentine bodies to move in a desired direction and in a desired locomotive manner;
selectively positioning (302) at least one of the plurality of serpentine bodies (100) in a desired location relative to the object (102);
inspecting (308), using the at least one sensor (108), the object (102); and
modifying (312) the object (102) using the at least one tool (110).

2. The method according to Claim 1, further comprising:
selectively positioning (302) the at least one sensor (108) relative to the object (102); and
determining (310) whether at least a portion of the object (102) satisfies at least one predefined quality standard associated with the object (102).

3. The method according to Claim 1 or 2, further comprising:
generating (304) a model image of the object (102) using data acquired by the at least one sensor (108); and
selectively positioning (302) at least one of the plurality of serpentine bodies (100) relative to the object (102) based on the generated model image.

4. The method according to any of Claims 1 to 3, further comprising communicating between the plurality of serpentine bodies (100) to facilitate at least one of inspecting (308) and modifying (312) the object (102).

5. The method according to any of Claims 1 to 4, wherein modifying (312) the object (102) further comprises at least one of sealing an opening defined in the object (102) and applying a patch to the object (102).

6. The method according to any of Claims 1 to 5, further comprising:
forming an opening in a portion of the object (102) using the at least one tool (108); and
navigating (306) at least one of the plurality of serpentine bodies (100) through the opening.

7. The method according to any of Claims 1 to 6, further comprising causing at least one of the plurality of serpentine bodies (100) to burrow under a portion of the object (102).

8. A system for maintaining an object (102), said system comprising:
a plurality of serpentine bodies (100);
at least one sensor (108) coupled to at least one of said plurality of serpentine bodies (100), said at least one sensor (108) configured to gather data from the object (102) being maintained; and
at least one tool (110) coupled to at least one of said plurality of serpentine bodies (100), said at least one tool (110) configured to selectively modify the object (102), and **characterized by** a control system (200) coupled to at least one of said plurality of serpentine bodies (100), said at least one sensor (108), and said at least one tool (110), said control system (200) configured to:
transmitting sine waves through the at least one of the plurality of serpentine bodies to cause the at least one of the plurality of serpentine bodies to move in a desired direction in a desired locomotive manner;
selectively position (302) said sensor (108) relative to the object (102); and
determine (310) whether at least a portion of the object (102) satisfies at least one predefined quality standard associated with the object (102).

9. The system according to Claim 8, wherein said control system (200) is further configured to determine a position of at least one of said plurality of serpentine bodies (100) relative to the object (102).

10. The system according to Claim 8 or 9, wherein said control system (200) is further configured to generate a model image of the object (102) using data acquired by said at least one sensor (108).

11. The system according to any of Claims 8 to 10, further comprising a communication device (210) coupled to said control system (200).

12. The system according to Claim 11, wherein said plurality of serpentine bodies (100) communicate to facilitate at least one of inspecting (308) and modifying (312) the object (102).

13. The system according to any of Claims 8 to 12, wherein said at least one sensor (108) comprises at least one of a camera, an optical sensor, an infrared sensor, a local positioning system sensor, an accelerometer, a gyroscope, an automated movement sensor, and a nondestructive evaluation sensor.

## Patentansprüche

1. Verfahren (300) zum Warten eines Objekts (102) unter Nutzung eines Steuerungssystems (200), wobei das Verfahren (300) folgende Schritte aufweist:
Koppeln mindestens eines Sensor (108) zu mindestens einem von einer Mehrzahl von Serpentinenkörpern (100), die dazu dimensioniert sind, in einen Zugang eingeführt zu werden, der in dem Objekt (102), das gewartet wird, definiert ist, wobei der mindestens eine Sensor (108) in Kommunikation mit dem Steuerungssystem (200) ist;
Koppeln mindestens eines Werkzeugs (110) zu mindestens einem der Mehrzahl von Serpentinenkörpern (100), wobei das mindestens eine Werkzeug (110) in Kommunikation mit dem Steuerungssystem (200) ist;
Koppeln des Steuerungssystems (200) zu mindestens einem von der Mehrzahl von Serpentinenkörpern (100);
Bestimmen einer Position von mindestens einem der Mehrzahl von Serpentinenkörpern (100) relativ zu dem Objekt (102);
Übertragen von Sinuswellen durch den mindestens einen von der Mehrzahl von Serpentinenkörpern, um zu bewirken, dass der mindestens eine der Mehrzahl von Serpentinenkörpern sich in eine gewünschte Richtung und in einer gewünschten lokomotivartigen Weise bewegt;
selektives Positionieren (302) mindestens eines der Mehrzahl von Serpentinenkörpern (100) an einem gewünschten Ort relativ zu dem Objekt (102);
Inspizieren (308) des Objekts (102) unter Nutzung des mindestens einen Sensors (108); und
Modifizieren (312) des Objekts (102) unter Nutzung des mindestens einen Werkzeugs (110).

2. Verfahren nach Anspruch 1, des Weiteren mit:
selektives Positionieren (302) des mindestens einen Sensors (108) relativ zu dem Objekt (102); und
Bestimmen (310), ob mindestens ein Abschnitt des Objekts (102) mindestens einem vordefinierten Qualitätsstandard genügt, der mit dem Objekt (102) assoziiert ist.

3. Verfahren nach Anspruch 1 oder 2, des Weiteren mit den folgenden Schritten:
Erzeugen (304) eines Modellbilds des Objekts (102) unter Nutzung von durch den mindestens einen Sensor (108) erlangten Daten; und
selektives Positionieren (302) mindestens eines der Mehrzahl von Serpentinenkörpern (100) relativ zu dem Objekt (102) basierend auf dem erzeugten Modellbild.

4. Verfahren nach einem der Ansprüche 1 bis 3, des Weiteren mit dem Schritt des Kommunizierens zwischen der Mehrzahl von Serpentinenkörpern (100) zum Erleichtern von zumindest einem von dem Inspizieren (308) und dem Modifizieren (312) des Objekts (102).

5. Verfahren nach einem der Ansprüche 1 bis 4, wobei das Modifizieren (312) des Objekts (102) des Weiteren zumindest eines von einem Abdichten einer in dem Objekt (102) definierten Öffnung und einem Beaufschlagen einer Ausbesserung auf das Objekt (102) aufweist.

6. Verfahren nach einem der Ansprüche 1 bis 5, des Weiteren mit den folgenden Schritten:
Ausbilden einer Öffnung in einem Abschnitt des Objekts (102) unter Nutzung des mindestens einen Werkzeugs (108); und
Navigieren (306) mindestens eines der Mehrzahl von Serpentinenkörpern (100) durch die Öffnung.

7. Verfahren nach einem der Ansprüche 1 bis 6, des Weiteren mit dem Bewirken von mindestens einem der Mehrzahl von Serpentinenkörpern (100) unter einen Abschnitt des Objekts (102) zu graben.

8. System zum Warten eines Objekts (102), wobei das System Folgendes aufweist:
eine Mehrzahl von Serpentinenkörpern (100);
mindestens einen Sensor (108), der an den mindestens einen der Mehrzahl von Serpentinenkörpern (100) gekoppelt ist, wobei der mindestens eine Sensor (108) dazu ausgebildet ist, Daten von dem zu wartenden Objekt (102) zu sammeln; und
mindestens ein Werkzeug (110), das mit dem mindestens einem der Mehrzahl von Serpentinenkörpern (100) gekoppelt ist, wobei das mindestens eine Werkzeug (110) dazu ausgebildet ist, das Objekt (102) selektiv zu modifizieren, und **gekennzeichnet durch** ein Steuerungssystem (200), das mit mindestens einem von der Mehrzahl von Serpentinenkörpern (100), dem mindestens einen Sensor (108) und
dem mindestens einen Werkzeug (110) gekoppelt ist, wobei das Steuerungssystem (200) zu Folgendem ausgebildet ist:
Übertragen von Sinuswellen **durch** den mindestens einen von der Mehrzahl von Serpentinenkörpern, um zu bewirken, dass der mindestens eine von der Mehrzahl von Serpentinenkörpern sich in eine gewünschte Richtung in einer gewünschten lokomotivartigen Weise bewegt;
selektives Positionieren (302) des Sensors (108) relativ zu dem Objekt (102); und
Bestimmen (310), ob mindestens ein Abschnitt des Objekts (102) mindestens einem mit dem Objekt (102) verknüpften vordefinierten Qualitätsstandard genügt.

9. System nach Anspruch 8, wobei das Steuerungssystem (200) des Weiteren dazu ausgebildet ist, eine Position von mindestens einem der Mehrzahl von Serpentinenkörpern (100) relativ zu dem Objekt (102) zu bestimmen.

10. System nach Anspruch 8 oder 9, wobei das Steuerungssystem (200) des Weiteren dazu ausgebildet ist, ein Modellbild des Objekts (102) unter Nutzung von durch den mindestens einen Sensor (108) erlangten Daten zu erzeugen.

11. System nach einem der Ansprüche 8 bis 10, des Weiteren mit einer Kommunikationseinrichtung (210), die mit dem Steuerungssystem (200) gekoppelt ist.

12. System nach Anspruch 11, wobei die Mehrzahl von Serpentinenkörpern (100) kommuniziert, um mindestens eines von einem Inspizieren (308) und einem Modifizieren (312) des Objekts (102) zu erleichtern.

13. System nach einem der Ansprüche 8 bis 12, wobei der mindestens eine Sensor (108) mindestens eines von einer Kamera, im optischen Sensor, ein Infrarotsensor, einem lokalen Positionierungssystemsensor, einem Beschleunigungsmesser, einem Gyroskop, einem automatischen Bewegungssensor und einem zerstörungsfreien Evaluierungssensor aufweist.

## Revendications

1. Procédé (300) destiné à la maintenance d'un objet (102) au moyen d'un système de commande (200), ledit procédé (300) comprenant les étapes suivantes :
coupler au moins un capteur (108) à au moins un d'une pluralité de corps en serpentin (100), chacun de la pluralité de corps en serpentin (100) étant dimensionné pour être inséré dans un accès défini dans l'objet (102) étant soumis à la maintenance, où l'au moins un capteur (108) est en communication avec le système de commande (200) ;
coupler l'au moins un outil (110) à au moins un de la pluralité de corps en serpentin (100), où l'au moins un outil (110) est en communication avec le système de commande (200) ;
coupler le système de commande (200) à au moins un de ladite pluralité de corps en serpentin (100) ;
déterminer une position d'au moins un de la pluralité de corps en serpentin (100) par rapport à l'objet (102) ;
transmettre des ondes sinusoïdales à travers l'au moins un de la pluralité de corps en serpentin pour amener l'au moins un de la pluralité de corps en serpentin à se déplacer dans une direction souhaitée et selon un moyen de locomotion souhaité ;
positionner de manière sélective (302) au moins un de la pluralité de corps en serpentin (100) à un emplacement souhaité par rapport à l'objet (102) ;
inspecter (308) l'objet (102) en utilisant l'au moins un capteur (108) ; et
modifier (312) l'objet (102) en utilisant l'au moins un outil (110).

2. Procédé selon la revendication 1, comprenant en outre les étapes suivantes :
positionner de manière sélective (302) l'au moins un capteur (108) par rapport à l'objet (102) ; et
déterminer (310) si au moins une partie de l'objet (102) satisfait au moins une norme de qualité prédéfinie associée à l'objet (102).

3. Procédé selon la revendication 1 ou la revendication 2, comprenant en outre les étapes suivantes :
générer (304) une image modélisée de l'objet (102) au moyen de données acquises par l'au moins un capteur (108) ; et
positionner de manière sélective (302) au moins un de la pluralité de corps en serpentin (100) par rapport à l'objet (102) sur la base de l'image modélisée générée.

4. Procédé selon l'une quelconque des revendications 1 à 3, comprenant en outre d'établir une communication entre la pluralité de corps en serpentin (100) afin de faciliter au moins une opération parmi l'inspection (308) et la modification (312) de l'objet (102).

5. Procédé selon l'une quelconque des revendications 1 à 4, dans lequel la modification (312) de l'objet (102) comprend en outre au moins une opération parmi le scellement d'une ouverture définie dans l'objet (102) et l'application d'une pièce de réparation au niveau de l'objet (102).

6. Procédé selon l'une quelconque des revendications 1 à 5, comprenant en outre les étapes suivantes :
former une ouverture dans une partie de l'objet (102) en utilisant l'au moins un outil (108) ; et
faire naviguer (306) l'au moins un de la pluralité de corps en serpentin (100) à travers l'ouverture.

7. Procédé selon l'une quelconque des revendications 1 à 6, comprenant en outre d'amener au moins un de la pluralité de corps en serpentin (100) à s'enfouir sous une partie de l'objet (102).

8. Système destiné à la maintenance d'un objet (102), ledit système comprenant :
une pluralité de corps en serpentin (100) ;
au moins un capteur (108) couplé à au moins un de ladite pluralité de corps en serpentin (100), ledit au moins un capteur (108) étant configuré pour collecter des données de l'objet (102) étant soumis à la maintenance ; et
au moins un outil (110) couplé à au moins un de ladite pluralité de corps en serpentin (100), ledit au moins un outil (110) étant configuré pour modifier de manière sélective l'objet (102), et **caractérisé par** un système de commande (200) couplé à au moins un de ladite pluralité de corps en serpentin (100), ledit au moins un capteur (108), et ledit au moins un outil (110), ledit système de commande (200) étant configuré pour :
transmettre des ondes sinusoïdales à travers l'au moins un de la pluralité de corps en serpentin pour amener l'au moins un de la pluralité de corps en serpentin à se déplacer dans une direction souhaitée et selon un moyen de locomotion souhaité ;
positionner de manière sélective (302) ledit capteur (108) par rapport à l'objet (102) ; et
déterminer (310) si au moins une partie de l'objet (102) satisfait au moins une norme de qualité prédéfinie associée à l'objet (102).

9. Système selon la revendication 8, dans lequel ledit système de commande (200) est en outre configuré pour déterminer une position d'au moins un de ladite pluralité de corps en serpentin (100) par rapport à l'objet (102).

10. Système selon la revendication 8 ou la revendication 9, dans lequel ledit système de commande (200) est en outre configuré pour générer une image modélisée de l'objet (102) au moyen de données acquises par ledit au moins un capteur (108).

11. Système selon l'une quelconque des revendications 8 à 10, comprenant en outre un dispositif de communication (210) couplé audit système de commande (200).

12. Système selon la revendication 11, dans lequel ladite pluralité de corps en serpentin (100) communique afin de faciliter au moins une opération parmi l'inspection (308) et la modification (312) de l'objet (102).

13. Système selon l'une quelconque des revendications 8 à 12, dans lequel ledit au moins un capteur (108) comprend au moins un dispositif parmi les suivants : une caméra, un capteur optique, un capteur infrarouge, un capteur de système de positionnement local, un accéléromètre, un gyroscope, un capteur de mouvement automatisé, et un capteur d'évaluation non destructive.
